# EUROPÄISCHE PATENTANMELDUNG

(11) **EP 1 084 616 A1**
(43) Veröffentlichungstag der Anmeldung: **21.03.2001**
(21) Anmeldenummer: 00118843.2
(22) Anmeldetag: 31.08.2000
(51) Int. Cl.: A01K 97/06

(54) **Vorrichtung zur schonenden Aufbewahrung von Mehrfach-Angelhaken**

(30) Priorität: 17.09.1999 DE 29916426 U; 27.01.2000 DE 10003451
(71) Anmelder: Thürnau, Anja geb. Frost, 31029 Banteln (DE)
(72) Erfinder: Thürnau, Andreas, 31029 Banteln (DE)

(57) **Zusammenfassung**

Die Erfindung befaßt sich mit einer Vorrichtung zur schonenden Aufbewahrung von Mehrfach-Angelhaken (16), an dessen Hakenschenkel (18) entweder ein Kunstköder (22) oder ein Vorfach (28) befestigt sein kann. Die Vorrichtung besteht aus einem Körper (12) aus derart weichem nachgiebigem Material, daß die Hakenspitzen (24) des Angelhakens (16) in den Körper (12) einsteckbar und herausnehmbar sind. Bei solchen Angelhaken, an denen ein Kunstköder (22) befestigt ist, weist der Körper (12) mindestens einen sich vom Außenrand nach innen erstreckenden Schlitz (14) auf, durch welchen der Hakenschenkel (18) seitlich in den Körper (12) einführbar ist. Für den Fall, daß an den Angelhaken (16) ein Vorfach (28) befestigt ist, besitzt der Körper (12) mindestens eine den Körper durchdringende Öffnung (26), in welche der Hakenschenkel (18) des Angelhakens (16) eingesteckt werden kann.

## Beschreibung

Die Erfindung betrifft eine Vorrichtung zur schonenden Aufbewahrung von Mehrfach-Angelhaken, an dessen Hakenschenkel entweder ein Kunstköder oder ein Vorfach befestigt sein kann.

Mehrfach-Angelhaken werden im Angelsport vielfach benutzt, was insbesondere für Drillinge gilt. Ein Drilling ist ein Angelhaken mit an drei Angelhaken befindlichen einzelnen Spitzen, die in einem Winkel von 120° voneinander wegstehen, wobei die Angelhaken kreisförmig gebogen verlaufen und in der Mitte in dem Hakenschenkel zusammenlaufen, an dessen Ende sich eine Öse befindet.

Zum Angeln wird an den Drilling über die Öse entweder ein sogenanntes Vorfach oder ein Kunstköder angebracht. Das Vorfach besteht üblicherweise aus einem Stück Angelschnur unterschiedlicher Dicke, welche an ihrem dem Drilling abgewandten Ende eine Schlaufe aufweist.

Kunstköder dienen zum Fischfang, und je nach Fischart werden verschiedene Formen und Größen sowie Materialien (wie z. B. Gummi, Metall, Holz, Federn und Kunststoff) eingesetzt, wobei der Kunstköder einen oder auch mehrere Drillinge aufweisen kann.

Wenn der Angler einen Drilling mit einem Vorfach benutzt hat, wird das Vorfach nach Gebrauch mit dem Drilling aufgewickelt und in einem Angelgerätekasten verstaut. Falls statt eines Vorfaches Kunstköder benutzt worden sind, werden diese in einem mit entsprechenden Fächern für die Kunstköder versehenen Gerätekasten untergebracht, wobei es aus Platzgründen üblich ist, daß immer mehrere Kunstköder in einem Fach verstaut werden. Der Drilling kann an dem Kunstköder befestigt bleiben; es ist aber auch möglich, den Drilling separat aufzubewahren.

Beim Ablegen der Drillinge in die dafür vorgesehenen Kästen ist häufig zu beobachten, daß sich die Angelhaken verheddern und daß insbesondere wegen der sehr scharfen Hakenspitzen die Gefahr von Verletzungen besteht. Man verwendet deshalb Vorrichtungen, mit denen diesen Nachteilen entgegengetreten werden kann.

Unter der Bezeichnung Drillingsschoner ist eine entsprechende Vorrichtung bekannt, die aus einem Kunststoffkörper aus Hartplastik besteht. Entsprechend der Anordnung der einzelnen Hakenspitzen des Drillings in einem Winkel von jeweils 120° ist der Kunststoffkörper sternförmig mit drei Kammern aufgebaut, wobei jede Kammer einen Angelhaken mit dessen Hakenspitze unter Klemmwirkung aufnimmt. Zu diesem Zweck wird der Drillingsschoner über den Drilling geschoben, und zwar in Richtung der Hakenspitzen, bis die Angelhaken in den Kammern des Kunststoffkörpers festgeklemmt sind.

Bei diesem Stand der Technik ist es jedoch nachteilig, daß aufgrund der unterschiedlichen Größen der Drillinge nicht immer gewährleistet ist, daß der Drilling nach dem Einklemmen in dem Drillingsschoner auch dort verbleibt. In der Praxis tritt nämlich häufig der Fall ein, daß der Drilling zu klein ist und die Klemmwirkung nicht ausreicht und der Drilling aus dem Drillingsschoner herausrutscht. Umgekehrt gibt es auch den anderen Fall, daß der Drilling zu groß ist und garnicht oder nur teilweise in den Drillingsschoner eingeführt werden kann. Schließlich kann es passieren, daß die Hakenspitzen des Drillings aus den Kammern herausschauen und somit eine erhebliche Verletzungsgefahr darstellen. Ein weiterer Nachteil besteht darin, daß dann, wenn die Hakenspitzen nicht vollständig innerhalb des Drillingsschoners angeordnet sind, sondern herausschauen, über längere Zeit die Hakenspitzen stumpf werden können.

Man könnte zwar daran denken, für jede Drillingsgröße einen entsprechenden Drillingsschoner aus Hartplastik zu verwenden, jedoch ist diese Lösung bei der Vielzahl der unterschiedlichen Drillingsgrößen sehr teuer, weshalb man sich in der Praxis immer wieder damit behilft, für mehrere Drillingsgrößen einen einheitlichen Drillingsschoner zu verwenden.

Der Erfindung liegt die Aufgabe zugrunde, zur Vermeidung der beschriebenen Nachteile eine Vorrichtung gemäß dem Oberbegriff des Patentanspruchs 1 zu schaffen, insbesondere einen Drillingsschoner, welche die Unterbringung aller unterschiedlicher handelsüblicher Größen von Mehrfach-Angelhaken ermöglicht, und zwar entweder allein oder mit daran befestigtem Vorfach oder Kunstköder, und welche einfach und preiswert herstellbar ist und die Verletzungsgefahr weiter verringert.

Die Lösung dieser Aufgabe erfolgt durch die Merkmale des kennzeichnenden Teils des Patentanspruchs 1.

Im nachfolgenden wird die erfindungsgemäße Vorrichtung der Einfachheit halber als Drillingsschoner bezeichnet, obwohl die Erfindung nicht auf einen Drilling mit drei Angelhaken beschränkt ist.

Bei der Erfindung besteht der Drillingsschoner aus einem Körper aus derart weichem und nachgiebigem Material, daß die Hakenspitzen des Angelhakens sowie auch der Angelhaken selbst in den Körper einsteckbar und herausnehmbar sind. Durch das überraschende Merkmal, einen weichen Körper als Drillingsschoner zu verwenden, können die Hakenspitzen und die Angelhaken problemlos in den Körper eintauchen und dort bis zum Herausnehmen verbleiben. Im Gegensatz zum Stand der Technik wird also ausdrücklich kein harter Körper aus Hartplastik verwendet, und weiterhin wird auch auf die bekannten Kammern verzichtet, in denen die Angelhaken festgeklemmt wurden.

Bei Angelhaken mit daran befestigtem Kunstköder ist gemäß einem weiteren Merkmal der Erfindung vorgesehen, daß der Körper des Drillingsschoners mindestens einen sich vom Außenrand des Körpers nach innen erstreckenden Schlitz aufweist. Durch diesen Schlitz kann der Hakenschenkel des Angelhakens seitlich in Richtung zur Mitte des Körpers eingeführt werden, und anschließend können die Hakenspitzen dann in das weiche Material des Körpers eintauchen.

Wenn an dem Angelhaken statt eines Kunstköders ein Vorfach befestigt ist, sieht die Erfindung gemäß einem weiteren Merkmal vor, daß in dem Körper des Drillingsschoners mindestens eine den Körper vollständig durchdringende Öffnung vorgesehen ist. Durch diese Öffnung kann der Hakenschenkel des Angelhakens durchgesteckt werden, bis die Hakenspitzen wiederum in den weichen Körper eintauchen. Das elastische Vorfach folgt beim Einstecken des Hakenschenkels in die Öffnung der Bewegung des Hakenschenkels und wird somit teilweise ebenfalls durch die Öffnung aufgenommen.

Wenn im übrigen an dem Drilling weder ein Vorfach noch ein Kunstköder angebracht ist und der Drilling allein aufbewahrt werden soll, so ist dies ohne weiteres sowohl bei der Alternative mit dem seitlichen Schlitz als auch bei der Alternative mit der den Körper durchdringenden Öffnung möglich.

Die Herstellung eines für die Erfindung geeigneten weichen Körpers ist im Vergleich zu den bekannten Drillingsschonern extrem einfach und billig, wodurch sich ein bedeutsamer Preisvorteil ergibt. Ein weiterer wesentlicher Vorteil besteht darin, daß der Drillingsschoner lediglich in einer Abmessung entsprechend dem größten vorhandenen Drilling ausgelegt werden muß, und daß er dann für alle anderen kleineren Drillinge als Drillingsschoner Verwendung finden kann. Die Fertigung nur einer Größe eines Drillingsschoners führt dabei zu einer weiteren Vereinfachung und zu einem weiteren Preisvorteil.

Anders als beim Stand der Technik tauchen bei der Erfindung die Hakenspitzen einfach in den weichen Körper ein und finden in dem weichen Material Halt. Somit sind die gefährlichen scharfen Hakenspitzen nicht mehr sichtbar und stellen auch keine Verletzungsgefahr mehr dar.

Gemäß einer vorteilhaften Weiterbildung der Erfindung ist vorgesehen, daß der Körper sowohl den seitlichen Schlitz als auch die den Körper durchdringende Öffnung aufweist, und zwar derart, daß sich die den Körper durchdringende Öffnung unmittelbar an das hintere bzw. innere Ende des Schlitzes anschließt, so daß der Schlitz in die Öffnung übergeht.

Der Vorteil dieser Maßnahme besteht darin, daß der Drillingsschoner für alle möglichen Aufbewahrungsfälle geeignet ist, also für Drillinge mit Vorfach, Drillinge mit Kunstköder oder auch für Drillinge allein. Somit ist es lediglich erforderlich einen einzigen Drillingsschoner herzustellen, der dann universell anwendbar ist.

Eine andere zweckmäßige Ausgestaltung der Erfindung besteht darin, daß der Körper des Drillingsschoners aus PUR-Schaum, PE-Schaum, Polystyrol, Zellkautschuk, Gummi oder Kork besteht.

All diese Materialien sind so weich, daß die Hakenspitzen des Drillings in den Körper eintauchen und dort hinreichend Halt finden und auch einfach wieder aus dem Körper herausgenommen werden können, und zwar praktisch beliebig oft.

Zum besseren Verständnis wird die Erfindung nachfolgend anhand der in der Zeichnung dargestellten Ausführungsbeispiele näher erläutert. Es zeigen:
- Fig. 1, 2: eine perspektivische Darstellung eines Drillingsschoners gemäß der ersten Alternative der Erfindung,
- Fig. 3: eine perspektivische Darstellung gemäß der zweiten Alternative der Erfindung,
- Fig. 4: eine perspektivische Darstellung einer ersten vorteilhaften Weiterbildung der Erfindung, und
- Fig. 5-7: Darstellungen von jeweils weiteren Ausführungsbeispielen der Erfindung.

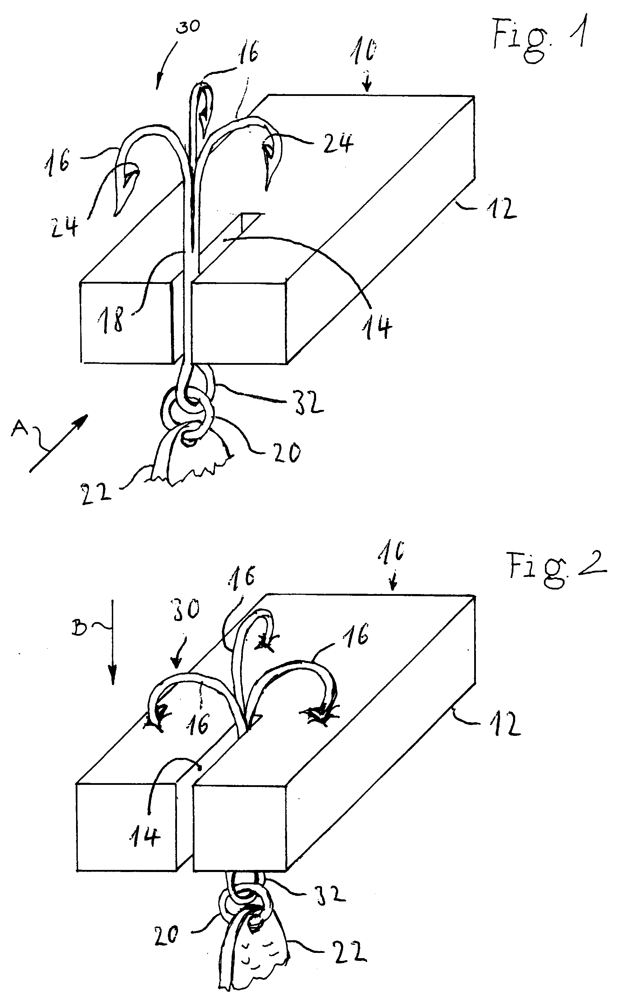

In Fig. 1 ist eine erste Alternative des erfindungsgemäßen Drillingsschoners 10 mit einem Körper 12 aus PUR-Schaum dargestellt. Dieser Drillingsschoner 10 ist insbesondere für einen mit drei Angelhaken 16 ausgestatteten Drilling 30 geeignet. Die Angelhaken 16 besitzen an ihren äußeren Enden jeweils eine Hakenspitze 24 und verlaufen bogenförmig an ihrem anderen Ende in einen Hakenschenkel 18 zusammen, an dessen Ende sich eine Öse 32 befindet. Über einen Ring 20 und über die Öse 32 ist an dem Hakenschenkel 18 des Drillings 30 ein Kunstköder 22 befestigt.

Der Körper 12 des Drillingsschoners 10 besitzt einen Schlitz 14, der sich vom Außenrand des Körpers 12 zum Inneren hin erstreckt. Durch diesen Schlitz 14 kann der Drilling 30 bzw. der Hakenschenkel 18 in Richtung des Pfeiles A seitlich zur Mitte des Körpers 12 eingeführt werden.

Fig. 2 verdeutlicht, daß der Drilling 30 bzw. die Angelhaken 16 mit den Hakenspitzen 24 anschließend durch Bewegung in Richtung des Pfeiles B in den weichen Körper 2 eintauchen, womit der Drilling 30 schonend im Drillingsschoner 10 angeordnet ist.

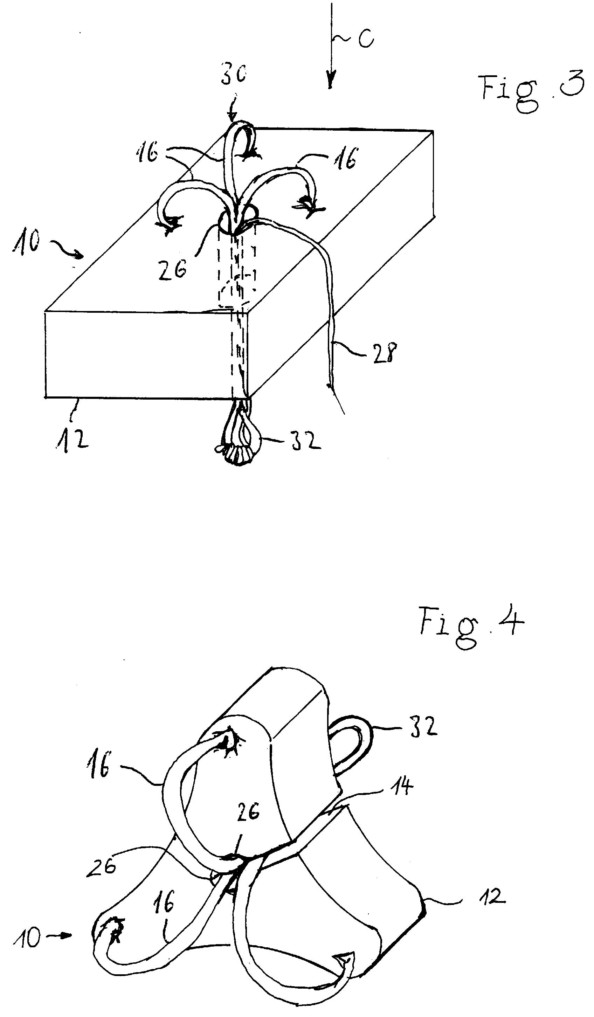

In Fig. 3 ist die zweite Alternative der Erfindung zur schonenden Aufbewahrung des Drillings 30 dargestellt, wenn dieser über die Öse 32 mit einem Vorfach 28 verbunden ist. Der Körper 12 besitzt eine Öffnung 26, durch welche der Drilling 30 mit dem Hakenschenkel 18 von oben her in Richtung des Pfeiles C hindurchgeführt werden kann, wobei die Angelhaken 16 wiederum in den weichen Körper 12 eintauchen, so daß der Drilling 30 schonend im Drillingsschoner 10 aufbewahrt ist. Wenn der Drilling 30 in Richtung des Pfeiles C durch die Öffnung 26 geführt wird, folgt die elastische Schnur des Vorfaches 28 der Bewegung, so daß die elastische Schnur des Vorfaches 28 zum Teil ebenfalls durch die Öffnung 26 aufgenommen wird.

In Fig. 4 ist ein vorteilhaftes Ausführungsbeispiel der Erfindung dargestellt, wobei der Körper 12 des -Drillingsschoners 10 sternförmig aufgebaut ist und sowohl mit dem seitlichen Schlitz 14 als auch mit der mittigen Öffnung 26 versehen ist. Dabei geht der sich vom Außenrand des Körpers 12 erstreckende seitliche Schlitz 14 in die mittige Öffnung 26 über. Dieses Ausführungsbeispiel des erfindungsgemäßen Drillingsschoners 10 kann sowohl für einen Drilling 30 mit daran befestigtem Kunstköder als auch für einen Drilling 30 mit daran befestigtem Vorfach 28 benutzt werden.

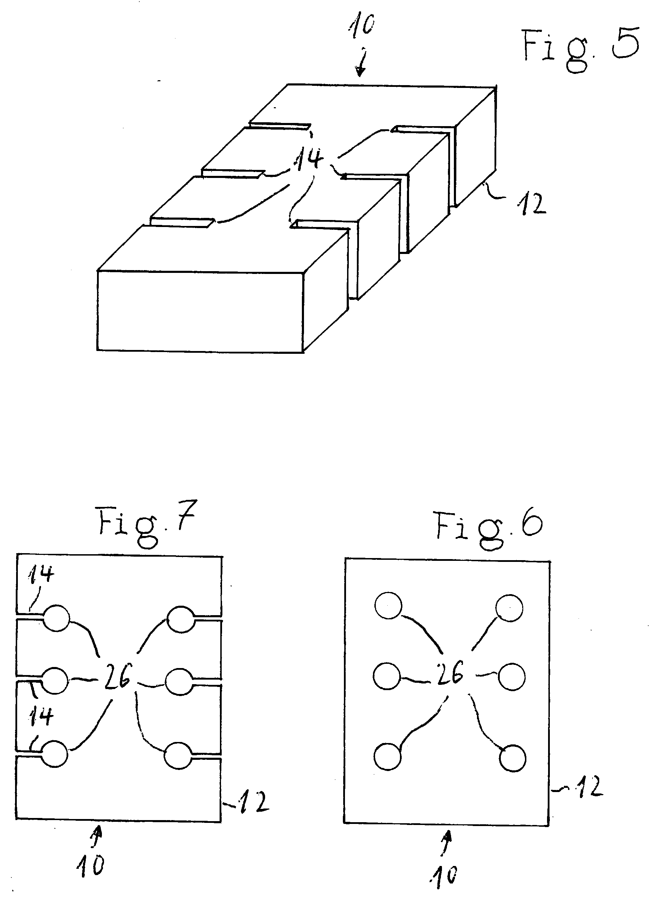

Bei dem weiteren Ausführungsbeispiel eines Drillingsschoners 10 gemäß Fig. 5 besitzt der Körper 12 an seinen gegenüberliegenden Seiten mehrere seitliche Schlitze 14, so daß es möglich ist, einen einzigen Drillingsschoner 10 zur schonenden Aufbewahrung von mehreren Drillingen mit daran befestigten Kunstködern zu benutzen.

Entsprechend ist in Fig. 6 ein anderes Ausführungsbeispiel eines quaderförmigen Körpers 12 mit mehreren Öffnungen 26 dargestellt, wobei dieser Drillingsschoner geeignet ist, mehrere Drillinge mit daran befestigten Vorfächern aufzunehmen.

Schließlich zeigt das weitere Ausführungsbeispiel gemäß Fig. 7 einen Körper 12 mit mehreren seitlichen Schlitzen 14, die jeweils in eine Öffnung 26 einmünden. Dieses Ausführungsbeispiel entspricht dem Drillingsschoner gemäß Fig. 4, mit dem Unterschied, daß es möglich ist, in nur einem einzigen Körper 12 gleichzeitig mehrere Drillinge schonend aufzubewahren, und zwar unabhängig davon, ob die Drillinge allein aufbewahrt werden, oder ob an dem Drilling ein Vorfach oder ein Kunstköder befestigt ist.

Alle in der Zeichnung dargestellten Varianten und Ausführungsformen des erfindungsgemäßen Drillingsschoners eignen sich übrigens auch dazu, einen oder mehrere Drillinge alleine aufzunehmen, also ohne daß an dem Drilling ein Vorfach oder ein Kunstköder befestigt ist.

## Patentansprüche

1. Vorrichtung zur schonenden Aufbewahrung von Mehrfach-Angelhaken (16), an dessen Hakenschenkel (18) entweder ein Kunstköder (22) oder ein Vorfach (28) befestigt sein kann, insbesondere Drillingsschoner, **dadurch gekennzeichnet**, daß die Vorrichtung aus einem Körper (12) aus derart weichem nachgiebigem Material besteht, daß die Hakenspitzen (24) des Angelhakens (16) in den Körper (12) einsteckbar und herausnehmbar sind, und daß bei Angelhaken (16) mit daran befestigtem Kunstköder (22) der Körper (12) mindestens einen sich von Außenrand nach innen erstreckenden Schlitz (14) aufweist, durch welchen der Hakenschenkel (18) des Angelhakens (16) seitlich in den Körper (12) einführbar ist, und daß bei Angelhaken (16) mit daran befestigtem Vorfach (28) in dem Körper (12) mindestens eine den Körper durchdringende Öffnung (26) vorgesehen ist, in welche der Hakenschenkel (18) des Angelhakens (16) einsteckbar ist.

2. Vorrichtung nach Anspruch 1, **dadurch gekennzeichnet**, daß der Körper (12) sowohl den seitlichen Schlitz (14) als auch die den Körper (12) durchdringende Öffnung (26) aufweist, welche sich an das hintere Ende des Schlitzes (14) anschließt.

3. Vorrichtung nach Anspruch 1 und/oder 2, **dadurch gekennzeichnet**, daß der Körper (12) aus PUR-Schaum, PE-Schaum, Polystyrol, Zellkautschuk, Gummi oder Kork besteht.
